# EUROPÄISCHE PATENTSCHRIFT

(11) **EP 3 513 985 B1**
(45) Veröffentlichungstag und Bekanntmachung des Hinweises auf die Patenterteilung: **04.08.2021**
(21) Anmeldenummer: 19152486.7
(22) Anmeldetag: 18.01.2019
(51) Int. Cl.: B42D 25/41, B42D 25/382, B42D 25/378, B41M 3/14, G06K 19/06

(54) **SYSTEM ZUR LASERINDIVIDUALISIERUNG SOWIE VERFAHREN ZUR JUSTIERUNG**
SYSTEM FOR LASER INDIVIDUALISATION AND METHOD FOR ADJUSTING
SYSTÈME D'INDIVIDUALISATION PAR LASER AINSI QUE PROCÉDÉ D'AJUSTEMENT

(30) Priorität: 19.01.2018 DE 102018101255
(43) Veröffentlichungstag der Anmeldung: 24.07.2019
(73) Patentinhaber: Bundesdruckerei GmbH, 10969 Berlin (DE)
(72) Erfinder: Vonrüty, Mario, 10247 Berlin (DE); Starick, Detlef, 17491 Greifswald (DE); Eberhardt, Mario, 16548 Glienicke (DE); Kasten, Frank, 13581 Berlin (DE); Sauer, Tatjana, 10409 Berlin (DE); Tschorn, Stefan, 16775 Gransee (DE)
(74) Vertreter: Eisenführ Speiser

(56) Entgegenhaltungen:
- WO-A2-03/081522
- DE-A1- 10 115 949

## Beschreibung

Die Erfindung betrifft ein System mit einer Vorrichtung zur Individualisierung und/oder Personalisierung eines Objekts mittels Laser, mit einer Laserquelle zum Erzeugen eines Laserstrahls, einer Zweikoordinatenablenkeinheit zum gezielten Ablenken des Laserstrahls um unterschiedliche Raumwinkel, einer Steuereinrichtung zum Steuern der Laserquelle und der Zweikoordinatenablenkeinheit, und einem Tisch mit einer Sollmarkierungsebene zur Aufnahme eines mittels eines vorzugsweise im Infraroten Spektralbereich emittierenden Laserstahls zu markierenden Objektes, und mit einem Referenzobjekt. Die Erfindung betrifft ferner ein Verfahren zum Justieren einer Vorrichtung zur Laserindividualisierung, ein Referenzobjekt zur Verwendung in dem Verfahren zum Justieren der Vorrichtung zur Laserindividualisierung.

Aus dem Stand der Technik ist es bekannt, Gegenstände, beispielsweise auf Kunststoffbasis hergestellte Dokumente, insbesondere Wert- und Sicherheitsdokumente, mit einem Laser zu markieren. Auf Kunststoffbasis hergestellte Dokumente werden häufig aus einzelnen Folien, die aus demselben oder unterschiedlichen Kunststoffen bestehen, zu einem Dokumentkörper zusammengefügt. Hierbei werden einige oder alle der Folien so ausgestaltet, dass diese für den menschlichen Betrachter nicht wahrnehmbare oder zumindest nicht ins Auge tretende Pigmente und oder sonstige Additive umfassen, die eine Absorption von Laserstrahlung begünstigen. Die bei der Absorption der Laserstrahlung absorbierte Energie wird genutzt, um das Kunststoffmaterial der entsprechend präparierten Folie, d.h. der aus dieser Folie gebildeten Schicht, in dem Dokument zu verändern. Insbesondere werden chemische Verbindungen der Polymere aufgebrochen, aus denen das Kunststoffmaterial gebildet ist, und eine Karbonisierung herbeigeführt. Dieses führt zu einer Schwärzung des beispielsweise ursprünglich transparenten Kunststoffmaterials. Alternativ ist es möglich, andere farbliche Änderungen oder strukturelle Änderungen durch die Lasereinstrahlung zu bewirken.

Beispielsweise offenbart WO 03/081522 A2 eine Vorrichtung sowie ein Verfahren zur Identifikation und Authentifikation eines Gegenstandes mit Hilfe von codierten Sicherheitsinformationen, die mit lumineszierenden Farbstoffen auf den Gegenstand aufgebracht werden. Diese werden mit Hilfe einer Lichtquelle angeregt und zeigen eine Lumineszenz, welche von einer Detektoreinrichtung empfangen wird. WO 03/081522 A2 offenbart nicht, dass die Steuereinrichtung dazu eingerichtet ist die Laserquelle so zu steuern, dass wenigstens ein Laserstrahl mit einer ersten Scanintensität und einer zweiten Markierungsintensität erzeugbar ist, wobei die Scanintensität geringer ist als die Markierungsintensität.

Ferner offenbart DE 101 15 949 A1 eine unsichtbare Laserbeschriftung als Sicherheitsmerkmal für Kunststoffkarten. Das Sicherheitsmerkmal wird dabei mit einem Laser im NIR-Bereich in eine Markierungsschicht der Kunststoffkarte eingeschrieben.

Bei einer Lasermarkierung von beispielsweise kunststoffbasierten Dokumenten ist es über eine Steuerung einer Pulsenergie der einzelnen Laserpulse möglich, einen Schwärzungsgrad des Kunststoffes zu kontrollieren. Hierüber können beispielsweise Graustufen bei der Lasermarkierung erzeugt werden. Vorteilhafterweise wird jeder Bildpunkt durch eine Wechselwirkung eines einzigen Laserpulses mit dem Material des Dokuments erzeugt. Über eine Strahlführungseinrichtung wird somit der von dem Laser erzeugte Laserstrahl über das Dokument bewegt, so dass durch die einzelnen Pulse in dem Laserstrahl jeweils einzelne Bildpunkte auf dem Dokument bzw. im Innern des Dokuments markiert werden. Auch eine kontinuierliche vektorartige Markierung ist möglich.

Um eine hochqualitative Markierung der Dokumente zu erreichen, ist eine Justierung der Vorrichtung erforderlich. Hierzu wird üblicherweise ein Referenzobjekt, beispielsweise eine Referenzkarte verwendet, auf der ein bestimmtes Referenzmuster aufgebracht ist. Dieses Referenzmuster (in der Regel Druckmarken, wie Kreuze, ein farbig abgesetzter QR-Code oder ein farbig abgesetztes Raster) kann dann durch eine optische Kamera erfasst werden, um dann zunächst die Kamera zu justieren. Insbesondere werden hierbei Krümmungen und Abbildungsfehler, wie beispielsweise Kissen, Tonnen, Transparenz durch Korrekturparameter berücksichtigt. Im Anschluss daran wird das Referenzobjekt oder ein weiteres Objekt mit einem vorbestimmten Testmuster markiert, welches dann seinerseits mit der zuvor justierten Kamera aufgenommen, kameraspezifisch korrigiert und über einen Soll-Ist-Vergleich die Positionierung der zwei Koordinatenablenkeinheit korrigiert wird. Insgesamt ist so das Abstimmen, bzw. Einstellen der Mailer-Koordinaten auf das Koordinatensystem der Karte schwierig und zeitaufwendig und es besteht der Bedarf, dies zu vereinfachen. Insbesondere ist es wünschenswert, wenn auf die Kamera, die zu diesem Zweck hochauflösend sein muss, verzichtet werden kann.

Es ist daher eine Aufgabe der Erfindung eine einfache Justierung für Vorrichtungen zur Individualisierung und/oder Personalisierung eines zu markierenden Objekts mittels Laser anzugeben, die insbesondere ohne hochauflösende Kamera auskommt.

Die vorliegende Erfindung löst die Aufgabe durch ein System nach Anspruch 1. Der lichtempfindliche Empfänger ist vorzugsweise zusätzlich oder alternativ mit der Steuereinrichtung verbunden, um einer ausgesteuerten Richtung des Laserstahls einen Wert der Lumineszenzstrahlung zuzuordnen.

Die Erfindung basiert auf der Idee, dass eine aufwendige passive Bilderfassung mittels der Kamera dadurch vermieden werden kann, dass die Justierung der Vorrichtung mit Hilfe eines mit Konversionsmaterial (Leuchtstoff) beschichteten Referenzobjekts z.B. einer Referenzkarte erfolgt, bei der der verwendete Leuchtstoff nach erfolgter Anregung mit einem vorzugsweise IR-Laserstrahl eine Emission im vorzugsweise sichtbaren Spektralbereich aussendet, die mittels eines lichtempfindlichen Empfängers der Vorrichtung erfasst werden kann. Leuchtstoffe dieser Art werden auch als Anti-Stokes-Leuchtstoffe oder aber Up-Converter bezeichnet. Mit Hilfe der beschriebenen Anordnung kann eine direkte Zuordnung der ausgesteuerten Richtung des Laserstrahls und der empfangenen Lumineszenzstrahlung vorgenommen werden, sodass ein Soll-Ist-Abgleich für die Steuereinrichtung und insbesondere die Zweikoordinatenablenkeinheit vorgenommen werden kann. Ein Abgleich zwischen der Lage der Referenzmarkierung und der ausgesteuerten Richtung des Laserstrahls kann vorgenommen werden. Es soll aber verstanden werden, dass im Sinne der Erfindung nicht zwangsläufig ein IR-Laser zum Einsatz kommen muss. Wichtiger ist das Bestrahlen mit zwei verschiedenen Intensitäten. Auch ist es nicht zwingend erforderlich, dass die Lumineszenzstrahlung (konvertierte Strahlung) im sichtbaren Spektralbereich ist, auch wenn dies bevorzugt ist. Wichtiger ist, dass der Spektralbereich der Lumineszenzstrahlung von dem des Lasers abweicht, sodass die Lumineszenzstrahlung von reflektierter Strahlung unterschieden werden kann.

Hierbei ist die Verwendung einer Kamera zum optischen Erfassen einer farbig abgesetzt aufgebrachten Referenzmarkierung nicht erforderlich. Hierdurch können auch diejenigen Fehler vermieden werden, die aufgrund einer optischen Verzerrung der Kamera bestehen. Da keine Kamera erforderlich ist entfällt auch der Schritt der Justierung der Kamera. Insgesamt ist somit eine direktere und damit weniger fehleranfällige Justierung der Vorrichtung erreicht, bei der die Justierung der Zweikoordinatenablenkeinheit nicht über eine Justierung der Kamera erfolgt.

Die Scanintensität und die Markierungsintensität unterscheiden sich vorzugsweise in dem Energieeintrag. Während die Scanintensität des Laserstrahls so gewählt ist, dass keine Markierung erfolgt, erfolgt bei einer Bestrahlung des Objekts mit der Markierungsintensität eine Markierung, das heißt eine Karbonisierung bestimmter Partikel. Die Scanintensität und die Markierungsintensität des Laserstrahls können sich in der Wellenlänge unterscheiden. Beispielsweise kann bei der Emission des Laserstrahls mit der Scanintensität eine Wellenlänge gewählt werden, die besonders zur Anregung des Konversionsmaterials wie beispielsweise der Anti-Stokes-Leuchtstoffs bzw. Up-Converter-Materials, das in dem Referenzobjekt verwendet wird, geeignet ist. Diese Wellenlänge hängt insbesondere davon ab, welches Konversionsmaterial für das Referenzobjekt verwendet wird.

Als zu markierende Objekte werden im Rahmen der Erfindung vorzugsweise Wert- und Sicherheitsdokumente eingesetzt, wie insbesondere Personalausweis, Führerschein, Pass, Kreditkarte usw.

Gemäß einer ersten bevorzugten Ausführungsform ist die Steuereinrichtung ferner dazu eingerichtet, eine vorbestimmte Markierung in ein auf dem Tisch aufgenommenes Objekt einzubringen, wobei eine Positionierung der Markierung in der Sollmarkierungsebene in Abhängigkeit der empfangenen Lumineszenzstrahlung erfolgt. Nachdem eine Lumineszenzstrahlung empfangen wurde, ist die Lage der Referenzmarkierung zur Laserquelle, bzw. zur Zweikoordinatenablenkeinheit bekannt, und die vorbestimmte Markierung kann eingebracht werden. Das Einbringen der vorbestimmten Markierung erfolgt dann in ein Objekt, das dafür vorgesehen ist, wie insbesondere ein Kartenrohling oder dergleichen. Eine vorbestimmte Markierung kann insbesondere eine Beschriftung oder ein Bild umfassen, wie insbesondere eine personalisierte Beschriftung, der Name des Karteninhabers, ein Bild des Karteninhabers oder dergleichen.

Vorzugsweise ist die Steuereinrichtung ferner dazu eingerichtet, basierend auf einer ersten von dem Empfänger bei einer ersten Richtung des Laserstrahls empfangenen Lumineszenzstrahlung und einer zweiten von dem Empfänger bei einer zweiten von der ersten Richtung verschiedenen Richtung des Laserstrahls empfangenen Lumineszenzstrahlung eine eindeutige Position des Referenzobjektes zu ermitteln. Vorzugsweise wird die Lage des Referenzobjekts zu der Vorrichtung registriert. Es wird angenommen, dass dann auch das zu markierende Objekt in der identischen Lage, das heißt in der Lage des Referenzobjektes aufgenommen wird. Hierdurch kann, ohne dass eine optische zusätzliche Überprüfung durch eine Kamera erforderlich ist, eine eindeutige Position des zu markierenden Objekts zum Laser, insbesondere zur Zweikoordinatenablenkeinheit bestimmt werden und die Markierung kann sehr genau in das zu markierende Objekt eingebracht werden.

Weiterhin ist bevorzugt, dass der Strahlengang des emittierten Laserstrahls und der Lumineszenzstrahlung wenigstens abschnittsweise identisch sind. Zwischen der Quelle des Laserstrahls und dem zu markierenden Objekt bzw. dem Referenzobjekt, ist wenigstens die Zweikoordinatenablenkeinheit angeordnet, die ihrerseits Fehler aufweisen kann. Indem die Lumineszenzstrahlung wenigstens abschnittsweise denselben Strahlengang aufweist, insbesondere einen Strahlengang, der über die Zweikoordinatenablenkeinheit verläuft, ist es möglich, auch diese Fehler mit zu berücksichtigen. Eine separate Kompensation dieser Fehler ist dann nicht erforderlich, da diese bereits durch die Zuordnung der empfangenen Lumineszenzstrahlung und der ausgesteuerten Richtung des Laserstrahls mitberücksichtigt werden. Hierdurch wird das Justieren der Vorrichtung weiter vereinfacht. Gegebenenfalls sind auch weitere optische Elemente in dem Strahlengang des Laserstrahls angeordnet. Für derartige optische Elemente gilt das Gesagte.

Vorzugsweise weist die Vorrichtung eine Optik auf, die zwischen der Zweikoordinatenablenkeinheit und der Sollmarkierungsebene angeordnet ist, wobei ein Strahlengang des konvertierten Lichtstrahls durch die Optik verläuft. Die Optik kann insbesondere eine oder mehrere Linsen aufweisen, zum Fokussieren des Laserstrahls auf die Sollmarkierungsebene. Auf diese Weise werden wie beschrieben Fehler der Optik bereits durch den Empfang der Lumineszenzstrahlung mit berücksichtigt und müssen nicht separat durch Justierung berücksichtigt werden.

Weiterhin ist bevorzugt, dass die Vorrichtung einen Strahlteiler zum Auskoppeln der Lumineszenzstrahlung und Leiten des ausgekoppelten Lichtstrahls zum lichtempfindlichen Empfänger aufweist. Der Strahlteiler ist vorzugsweise möglichst nah an der Quelle des Laserstrahls angeordnet.

In einer bevorzugten Ausführungsform ist die Zweikoordinatenablenkeinheit zwischen der Optik und dem Strahlteiler angeordnet. Hierdurch ist der Strahlteiler direkt zwischen der Quelle des Laserstrahls und der Zweikoordinatenablenkeinheit angeordnet und der Strahlengang des emittierten Laserstrahls und der Lumineszenzstrahlung sind weitgehend identisch. Der Strahlengang wenigstens eines Teils der Lumineszenzstrahlung verläuft dann von der Sollmarkierungsebene, bzw. demjenigen Abschnitt des Referenzobjektes, das die Lumineszenzstrahlung emittiert, durch die Optik, die Zweikoordinatenablenkeinheit bis zum Strahlteiler und wird dort ausgekoppelt und auf den lichtempfindlichen Empfänger geleitet. Hierdurch können sämtliche Fehler der Optik und der Zweikoordinatenablenkeinheit direkt mitberücksichtigt werden und müssen nicht separat berücksichtigt werden.

In einer weiteren bevorzugten Ausführungsform weist die Vorrichtung einen Filter für den lichtempfindlichen Empfänger auf, der zum Herausfiltern von Wellenlängen vorgesehen ist, die nicht der Lumineszenzstrahlung zuzuordnen sind. Das Filter ist beispielsweise ein Sperrfilter für IR-Strahlung und/oder ein Notchfilter für die Konversionsfarbe des verwendeten Konversionsmaterials. Hierdurch ist es möglich, dass insbesondere Streulicht oder Licht von beispielsweise Status-LEDs oder dergleichen, oder reflektiertes Licht des Laserstrahls, das keine Lumineszenzstrahlung ist, herausgefiltert wird. Hierdurch wird vermieden, dass eine fehlerhafte Zuordnung zwischen einem beispielsweise reflektierten Licht oder Streulicht, das irrtümlicherweise als Lumineszenzstrahlung durch den lichtempfindlichen Empfänger empfangen wird, und einer ausgesteuerten Richtung des Laserstrahls zugeordnet wird. Die Lumineszenzstrahlung hat üblicherweise abhängig von dem Konversionsmaterial einen sehr schmalen Wellenlängenbereich, sodass gerade der Einsatz eines Notchfilters sinnvoll ist. Zusätzlich können ein oder mehrere Sperrfilter verwendet werden, um bekannte Wellenlängen bekannter reflektierter Strahlung und/oder Strahlung von Status-LEDs herauszufiltern.

In einer besonders bevorzugten Ausführungsform ist der lichtempfindliche Empfänger als Fotodiode ausgebildet. Ein solches Bauteil ist sehr preiswert und braucht keinen besonders großen Bauraum, sodass sowohl der Bauraum der Vorrichtung insgesamt verkleinert ist als auch deren Kosten. Insbesondere ist bei der vorgeschlagenen Vorrichtung keine bildgebende Auflösung erforderlich, um eine Justierung der Vorrichtung zu erreichen, sodass der Einsatz einer Fotodiode ausreichend ist. Die Fotodiode kann einen schmalen Wellenlängenbereich aufweisen, der dem der Lumineszenzstrahlung entspricht.

Weiterhin ist bevorzugt, dass die Steuereinrichtung dazu eingerichtet ist, basierend auf einer Sequenz von dem Empfänger empfangener Lumineszenzstrahlung, eine Information zu decodieren. In diesem Ausführungsbeispiel kann vorgesehen sein, dass auf der Referenzkarte Informationen mittels beispielsweise als Barcode oder QR-Code, eingebrachten Konversionsmaterials hinterlegt sind. Diese Information kann dann gemäß dieser Ausführungsform mittels der Vorrichtung ausgelesen werden. Hierzu wird der Lichtstrahl mit der Scanintensität ausgestrahlt und die Sequenz der empfangenen Lumineszenzstrahlung erfasst, und basierend hierauf eine Information decodiert. Eine derartige Information kann beispielsweise dazu verwendet werden, einen internen Wartungszähler für eine routinemäßige Justage der Vorrichtung auf null zu setzen. Auch ist denkbar, dass auf diese Weise ein Softwareupdate für die Steuereinrichtung übergeben wird. Weitere Beispiele umfassen Information über Markierungen, die in nachfolgende Objekte eingebracht werden sollen, oder auch Authentizitäts- und Echtheitsinformationen.

In einem zweiten Aspekt der Erfindung wird die eingangs genannte Aufgabe gelöst durch ein Verfahren zum Justieren einer Vorrichtung zur Individualisierung eines zu markierenden Objekts mittels Laser, vorzugsweise einer Vorrichtung gemäß einer der zuvor beschriebenen bevorzugten Ausführungsformen einer Vorrichtung gemäß dem ersten Aspekt der Erfindung, mit den Schritten: Anordnen eines Referenzobjekts mit einer Referenzmarkierung mit Konversionsmaterial auf einem Tisch der Vorrichtung zur Individualisierung eines zu markierenden Objekts mittels Laser; Erzeugen eines Laserstrahls mit einer Scanintensität, bei der keine Markierung des Referenzobjekts erfolgt; Scannen des Referenzobjekts mittels des Laserstrahls mit der Scanintensität durch Steuern der Richtung des Laserstrahls; Empfangen einer vom Referenzobjekt emittierten Lumineszenzstrahlung; Zuordnen der Richtung des Laserstrahls zum Empfang der Lumineszenzstrahlung; Erzeugen eines Laserstrahls mit einer Markierungsintensität; und in Abhängigkeit der empfangenen Lumineszenzstrahlung, Einbringen einer vorbestimmten Markierung in ein Objekt mittels des Laserstrahls mit der Markierungsintensität.

Es soll verstanden werden, dass das System gemäß dem ersten Aspekt der Erfindung sowie das Verfahren gemäß dem zweiten Aspekt der Erfindung gleiche und ähnliche Unteraspekte aufweisen wie sie insbesondere in den unabhängigen Ansprüchen niedergelegt sind. Insofern wird für Vorteile und weitere bevorzugte Merkmale auf das System gemäß dem ersten Aspekt der Erfindung vollumfänglich Bezug genommen.

Weiterhin ist bevorzugt, dass das Verfahren umfasst: Ermitteln, basierend auf der Zuordnung der Richtung des Laserstrahls zum Empfang der Lumineszenzstrahlung, eine Lage eines Koordinatensystems des Referenzobjekts; und Ermitteln einer Abweichung des Koordinatensystems des Referenzobjekts zu einem Koordinatensystem der Vorrichtung zur Individualisierung mittels Laser. Aufgrund von Fehlern in der Optik oder auch in dem Tisch kann es zu Abweichungen zwischen einem Koordinatensystem der Vorrichtung und einem Koordinatensystem des Referenzobjektes kommen. Diese sollten übereinstimmen, sodass bei einer Markierung eines zu markierenden Objekts, das anstelle des Referenzobjektes aufgenommen wird, die einzubringende Markierung an einer vorbestimmten Stelle korrekt ausgeführt wird. Das Referenzobjekt umfasst eine Referenzmarkierung mit Konversionsmaterial, sodass bekannt ist, bei welchen ausgesteuerten Richtungen des Laserstrahls die Lumineszenzstrahlung empfangen werden sollte. Besteht hier eine Abweichung, kann eine Abweichung der Koordinatensysteme zueinander bestimmt werden und eine Transformation des Koordinatensystems der Vorrichtung und des Koordinatensystems des Referenzobjektes vorgenommen werden.

Weiterhin umfasst das Verfahren vorzugsweise den Schritt: Einbringen einer Markierung in das Referenzobjekt mittels des Laserstrahls mit der Markierungsintensität, wenigstens teilweise über die Referenzmarkierung. Auf diese Weise wird einerseits die Referenzmarkierung zerstört, sodass das Referenzobjekt nicht nochmals verwendet werden kann. Andererseits ist dies eine besonders einfache Möglichkeit, beispielsweise ein Justageprotokoll oder dergleichen auszugeben. Die mittels des Laserstrahls eingebrachte Markierung wird vorzugsweise erst nach Abschluss der Justierung eingebracht. Die Referenzmarkierung auf dem Referenzobjekt wird nun nicht mehr benötigt, da die Justierung abgeschlossen ist und kann überschrieben werden. Beispielsweise kann eine einfache Markierung eingebracht werden, die einem Bediener anzeigt, dass die Justierung abgeschlossen ist. Gleichzeitig können auch weitere Handlungsanweisungen an den Bediener ausgegeben werden, wie etwa, dass ein Servicemitarbeiter gerufen werden muss, bestimmte Teile gewartet werden sollen oder dergleichen.

Das im erfindungsgemäßen System eingesetzte Referenzobjekt, insbesondere eine Referenzkarte, ist zur Verwendung in einer Vorrichtung nach einer der vorstehend beschriebenen bevorzugten Ausführungsformen des Systems gemäß dem ersten Aspekt der Erfindung und/oder einem Verfahren zum Justieren einer Vorrichtung zur Individualisierung mittels Laser, insbesondere einem Verfahren nach einem der vorstehend beschriebenen bevorzugten Ausführungsformen eines Verfahrens gemäß dem zweiten Aspekt der Erfindung vorgesehen, wobei das Referenzobjekt einen Grundkörper und eine Referenzmarkierung aufweist, die Konversionsmaterial aufweist. Vorzugsweise ist die Referenzmarkierung aus Konversionsmaterial gebildet und/oder besteht vorzugsweise aus dieser.

Das Referenzobjekt ist dafür vorgesehen und eingerichtet, in dem System gemäß dem ersten Aspekt der Erfindung und/oder in dem Verfahren gemäß dem zweiten Aspekt der Erfindung verwendet zu werden. Die Referenzmarkierung repräsentiert vorzugsweise ein Koordinatensystem des Referenzobjektes. Es soll verstanden werden, dass das System gemäß dem ersten Aspekt der Erfindung und das Verfahren gemäß dem zweiten Aspekt der Erfindung und das Referenzobjekt gleiche und ähnlich Unteraspekte aufweisen, wie sie insbesondere in den abhängigen Ansprüchen niedergelegt sind. Insofern wird für bevorzugte Ausführungsformen und deren Vorteil auf die obige Beschreibung vollständig Bezug genommen.

In einer ersten bevorzugten Ausführungsform ist die Referenzmarkierung ausgewählt aus einer Gruppe umfassend: Raster, Barcode, QR-Code, ein oder mehrere Mehrecke, mehrere winkelig zueinander angeordnete Striche, mehrere Punkte. Auch Kombinationen hiervon sind denkbar und bevorzugt. Beispielsweise kann einerseits ein QR-Code vorgesehen sein, der bestimmte Informationen repräsentiert, aber auch ein Viereck, das einen zu markierenden Bereich umrandet. Bevorzugt sind auch Kreuze, wie sie als Druckmarken bekannt sind und üblicherweise auf herkömmlichen Karten vorgesehen sind, um mittels einer optischen Kamera erfasst zu werden.

Weiterhin ist bevorzugt, dass die Breite der Referenzmarkierung einem Bildpunkt entspricht. Das heißt, ein Strich des Rasters, ein Strich des Mehrecks oder dergleichen entspricht einem Bildpunkt. Hierdurch wird eine Zuordnung eines empfangenen konvertierten Lichtstrahls zu einer ausgesteuerten Richtung des Laserstrahls vereinfacht, da eine definierte Breite und somit auch ein definierter Abstand zwischen einzelnen Bildpunkten vorgegeben ist. Es hat sich beispielsweise herausgestellt, dass eine Breite von einem Bildpunkt von kleiner 100 µm, vorzugsweise kleiner 50 µm, etwa im Bereich von 50 µm bevorzugt ist, da sowohl fertigungstechnische Toleranzen eingehalten werden können als auch ausreichende Lichtintensität der Lumineszenzstrahlung bei entsprechender Anregung mit dem Laserstrahl mit der Scanintensität emittiert werden kann.

Besonders bevorzugt sind solche Referenzmarkierungen, die auch die Ermittlung einer Winkelverzerrung erlauben. Das heißt, insbesondere sind bevorzugt Raster aus Kreuzen, QR-Codes, oder andere Muster, bei denen Kanten in rechten Winkeln zueinander oder in anderen bekannten Winkeln verlaufen. Hierdurch lässt sich insbesondere die Winkelverzerrung erkennen. Auch ist bevorzugt, dass ein Abstand gemessen werden kann, beispielsweise über eine Fokusverschiebung.

Vorzugsweise weist das Konversionsmaterial IR-anregbare und im sichtbaren Spektralbereich emittierende Anti-Stokes-Leuchtstoffe bzw. Up-Converter Materialien auf. Solche Anti-Stokes-Leuchtstoffe bzw. Up-Converter bestehen in aller Regel aus anorganischen Grundgittermaterialien, die insbesondere durch Einbau der Aktivatorkombinationen Yb³⁺-Eᵣ³⁺, Yb³⁺-Tm³⁺ und Yb³⁺-Ho³⁺ in die Lage versetzt werden über mehrstufige Anregungsprozesse IR-Strahlung in den sichtbaren Spektralbereich zu transformieren. Bei der Anwendung von Yb³⁺-Er³⁺- und Yb³⁺-Ho³⁺-Aktivator/Koaktivator-Kombinationen werden in Abhängigkeit von der Art des verwendeten Grundgitters zumeist grün oder rot emittierende Anti-Stokes-Leuchtstoffe erhalten, während Yb³⁺-Tm³⁺- dotierte Materialien zumeist blau lumineszieren. Als Grundgitter werden vorzugsweise oxidische anorganische Verbindungen (beispielsweise Y₂O₃, ZrO₂, La₂MoO₆, LaNbO₄ und LiYSiO₄), Oxyhalogenide (z.B. YOCI, LaOCI, LaOBr, YOF, LaOF), Oxysulfide (Y₂O₂S, La₂O₂S, Gd₂O₂S, Lu₂O₂S) oder Fluoride (YF₃, LaF₃, LiYF₄, NaYF₄, NaLaF₄, BaYF₅) eingesetzt.

Besonders bevorzugt sind die Pigmente des Konversionsmaterials so gewählt, dass sie offsetdruckfähig sind. Vorzugsweise weisen die Pigmente einen Durchmesser d90 < 5,0 µm auf. Insgesamt ist eine Pigmentbeladung von etwa 5 bis 15 % bevorzugt, um eine ausreichende Upconversion-Lumineszenz zu erreichen.

Neben dem Offsetdruckverfahren sind auch die für Sicherheitsdokumente in Form von Smart-Cards üblichen Druckverfahren Letterset oder Flexodruck sowohl mit oxidativ trocknenden Farben als auch UV-härtenden Farben anwendbar und einbezogen.

In einer weiteren Ausführungsform kann vorgesehen sein, dass in dem Referenzobjekt zwei oder mehr Fokusebenen vorgesehen sind, in denen verschiedene Konversionsmaterialien angeordnet sind. So sind in beispielsweise einer ersten Ebene eine Yb³⁺-Er³⁺ Aktivator/Koaktivator-Kombination angeordnet, während in einer zweiten Ebene ein Yb³⁺-Tm³⁺- dotiertes Material verwendet wird. So kann je nach Empfang der Farbe der Lumineszenzstrahlung bestimmt werden, in welcher Fokusebene der Laserstrahl mit der Scanintensität eine Anregung hervorgerufen hat. Dies ist insbesondere dann bevorzugt, wenn eine farbige Lasermarkierung in dem Objekt vorgenommen werden soll, das heißt, beispielsweise dann, wenn das zu markierende Objekt in (verschiedenen) Ebenen verschiedene farbliche Pigmente aufweist, sodass, um ein einzelnes Pigment zu karbonisieren, die Fokusebene des Lasers mit Scanintensität verschoben werden muss. Auf diese Weise kann sichergestellt werden, dass der Fokus des Laserstrahls in der korrekten Markierungsebene liegt, und so das Pigment der korrekten Farbe karbonisiert wird.

Es ist aber auch möglich, die verschiedenen farblichen Pigmente lateral in einer Ebene in einer definierten Matrix und in einem bestimmten Abstand zueinander vorzulegen und z.B. eine Farbe mit Up-Konversionmaterial auszustatten, um so die Position einer Farbe direkt bestimmen zu können. Da die weiteren Farben in einer solchen Ausführungsform vorzugsweise in einem festen räumlichen Bezug zueinander stehen, ist so die Position von allen farbigen Bildpunkten zu ermitteln.

Weiterhin wird eine Verwendung eines Referenzobjektes gemäß dem dritten Aspekt in einem System nach dem ersten Aspekt der Erfindung und/oder in einem Verfahren nach dem zweiten Aspekt der Erfindung offenbart.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wo zur Erläuterung dienlich, in schematisierter und/oder leicht verzerrter Form ausgeführt. Im Hinblick auf Ergänzungen der aus der Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung, wie sie in den Ansprüchen festgelegt ist, abzuweichen. Die allgemeine Idee der Erfindung ist nicht beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Figur 1: eine schematische Ansicht einer Vorrichtung zur Laserindividualisierung;
- Figur 2: ein Referenzobjekt in einem ersten Ausführungsbeispiel; und
- Figur 3: ein Referenzobjekt in einem zweiten Ausführungsbeispiel.

Die Erfindung basiert auf der Idee, dass eine aufwendige passive Bilderfassung mittels der Kamera dadurch vermieden werden kann, dass die Justierung der Vorrichtung 1 mit der Hilfe eines Leuchtstoff beschichteten Referenzobjekts 16 erfolgt, bei dem der verwendete Leuchtstoff nach erfolgter Anregung mit einem IR-Laserstrahl 4 eine Emission im sichtbaren Spektralbereich aussendet, die mittels eines lichtempfindlichen Empfängers 18 der Vorrichtung 1 erfasst werden kann. Leuchtstoffe dieser Art werden als Anti-Stokes-Leuchtstoffe oder aber Up-Converter bezeichnet. Mit Hilfe der beschriebenen Anordnung kann eine direkte Zuordnung der ausgesteuerten Richtung des Laserstrahls 4 und der empfangenen Lumineszenzstrahlung 20 vorgenommen werden, sodass ein Soll-Ist-Abgleich für die Steuereinrichtung und insbesondere die Zweikoordinatenablenkeinheit vorgenommen werden kann. Ein Abgleich zwischen der Lage der Referenzmarkierung und der ausgesteuerten Richtung des Laserstrahls kann vorgenommen werden.

Eine Vorrichtung 1 zur Individualisierung und/oder Personalisierung eines zu markierenden Objekts 14 mittels Laser weist eine Laserquelle 2 zum Erzeugen eines Laserstrahls 4 auf. Derartige Vorrichtungen 1 werden dazu verwendet, Objekte, wie insbesondere Karten, beispielsweise Kreditkarten, Ausweiskarten und dergleichen, Laser zu beschriften, indem der Laserstrahl 4 fokussiert wird, um bestimmte Partikel, die in einem Kartenkörper untergebracht sind, zu karbonisieren. Hierbei wird insbesondere unterschieden zwischen einer herkömmlichen Individualisierung mittels Laser, bei der ausschließlich Pigmente einer einzigen Farbe verwendet werden, sodass eine monochrome Markierung erfolgt, und einer farbigen Individualisierung mittels Laser, bei der auch eine mehrfarbige Beschriftung oder Markierung des Objekts möglich ist. Eine Variante der farbigen Individualisierung mittels Laser nutzt eine voreingebrachte Matrix aus verschiedenfarbigen Pigmenten, nämlich insbesondere den CMYK-Farbmodell entsprechend, um dann mittels des Laserstrahls 4 jeweils ein, zwei oder alle drei Farbpigmente (Cyan, Magenta, Gelb) zu karbonisieren, um die anderen Hervortreten zu lassen. Die hierin offenbarte Vorrichtung eignet sich besonders für die farbige Individualisierung mittels Laser.

Ein zu markierendes Objekt 14 wird in der Vorrichtung 1 auf einem Tisch 10 angeordnet. Eine Sollmarkierungsebene 12 verläuft durch das Objekt 14, da die zu karbonisierenden Partikel im Inneren des Objekts 14 vorgesehen sind.

Um den Laserstrahl 4 über ein zu markierendes Objekt 14 zu führen, weist die Vorrichtung 1 eine Zweikoordinatenablenkeinheit 6 auf, die beispielsweise aus zwei verstellbaren Spiegeln besteht. Die Spiegel sind dann auf zwei senkrecht aufeinander stehende Achsen drehbar, sodass Laserstrahl 4 über die gesamte Sollmarkierungsebene 12 geführt werden kann.

Die Laserquelle 2 und die Zweikoordinatenablenkeinheit 6 werden mittels einer Steuereinrichtung 8 gesteuert, auf der insbesondere ein Programm ausgeführt werden kann, das die Steuereinrichtung 8 veranlasst, Steuersignale an die Zweikoordinatenablenkeinheit 6 zu senden, um den Laserstrahl 4 entsprechend in der Sollmarkierungsebene 12 zu führen, um eine gewünschte Markierung des Objekts 14 zu erreichen. Zu diesem Zweck kann die Steuereinrichtung 8 bekannte Bauelemente wie einen Prozessor, einen Speicher und ein oder mehrere Schnittstellen zur Kommunikation und/oder Datenübertragung aufweisen.

Um nun eine derartige Vorrichtung 1 zu justieren, wurde im Stand der Technik üblicherweise eine hochauflösende Kamera eingesetzt, die die Sollmarkierungsebene 12 und das zu markierende Objekt 14 beobachtet. Diese Kamera wurde justiert und anschließend mittels der Laserquelle 2 eine Testmarkierung in ein Testobjekt eingebracht und mit der Kamera überprüft. Es wurde ein Soll-Ist-Vergleich durchgeführt und basierend auf diesem Soll-Ist-Vergleich dann die Steuereinrichtung 8, die Laserquelle 2 und/oder die Zweikoordinatenablenkeinheit 6 justiert, um eine korrekte Markierung des Objekts 14 zu erreichen.

Eine solche Justierung umfasst einerseits eine Mehrzahl an Schritten, andererseits ist hierfür eine hochauflösende Kamera erforderlich. Beides ist nicht wünschenswert. Auch wenn der Soll-Ist-Vergleich der eingebrachten Testmarkierung erfolgreich abgeschlossen wurde, können dennoch weitere Fehlerquellen in der Kamera liegen, sodass das Ergebnis der Individualisierung mittels Laser trotz Justierung nicht optimal ist.

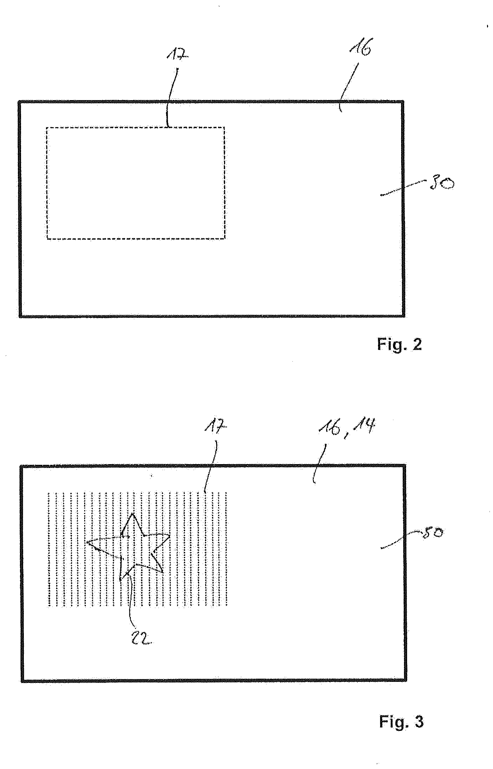

Im Gegensatz dazu wird von dem vorliegenden Ausführungsbeispiel vorgeschlagen, ein Referenzobjekt 16 zu verwenden, das eine Referenzmarkierung 17 mit Konversionsmaterial aufweist und die Vorrichtung 1 anstelle der hochauflösenden Kamera mit einem lichtempfindlichen Empfänger 18 auszustatten, der zum Erfassen von vom Referenzobjekt 16 (Fig. 2) emittierter Lumineszenzstrahlung 20 vorgesehen ist. Der lichtempfindliche Empfänger 18 ist mit der Steuereinrichtung 8 verbunden. Die Steuereinrichtung 8 ist dazu ausgebildet einer ausgesteuerten Richtung des Laserstrahls 4 einen Empfang von Lumineszenzstrahlung 20 zuzuordnen. Auf diese Weise kann ein Soll-Ist-Vergleich sehr einfach realisiert werden. Die Referenzmarkierung 17 auf dem Referenzobjekt 16 ist bekannt und es ist bekannt, bei welcher ausgesteuerten Richtung des Laserstrahls 4 Lumineszenzstrahlung empfangen werden müsste. Hierzu ist keine hochauflösende Kamera erforderlich, sondern ein einfacher lichtempfindlicher Empfänger 18 reicht aus. Der lichtempfindliche Empfänger 18 ist in diesem Ausführungsbeispiel insbesondere als Fotodiode 19 ausgebildet.

Die Laserquelle 2 ist in diesem Ausführungsbeispiel dazu ausgebildet, einen Laserstrahl 4 mit einer Scanintensität und mit einer Markierungsintensität auszusenden. Bei der Bestrahlung des Objekts 14 mit der Scanintensität findet keine Markierung statt, das heißt keine Karbonisierung von Partikeln. Die Scanintensität des Laserstrahls 4 ist aber hoch genug, um das Konversionsmaterial, das in dem Objekt 14 für die Referenzmarkierung 17 vorgesehen ist, anzuregen, so dass Lumineszenzstrahlung 20 emittiert wird. Der Laserstrahl 4 hat dazu vorzugsweise eine Wellenlänge im Infrarot (IR) Bereich. Im Gegensatz dazu ist die Markierungsintensität des Laserstrahls 4 derart hoch, dass Karbonisierung von einzelnen Pigmenten in dem Objekt 14 oder dem Referenzobjekt 16 erfolgen kann. Insbesondere ist es bei einer Markierungsintensität auch möglich, Pigmente des Konversionsmaterials zu karbonisieren, sodass die Konversionseigenschaft verloren geht.

Vorzugsweise ist die Laserquelle 2 als Infrarotlaserquelle ausgebildet und emittiert vorzugsweise Laserstrahlen im Nahinfrarotbereich, wie beispielsweise um die 1000 nm Wellenlänge (z.B. 980 nm oder 1190 nm Wellenlänge), das dann eine Emission von Lumineszenzstrahlung etwa mit 500 nm Strahlung bewirkt. Es ist auch denkbar, dass die Laserquelle 2 dazu eingerichtet ist, bei Emittieren eines Laserstrahls 4 mit der Scanintensität eine andere Wellenlänge zu emittieren, als bei der Emission eines Laserstrahls 4 mit Markierungsintensität. Die Wellenlänge des Laserstrahls 4 sollte auf das verwendete Konversionsmaterial (vorzugsweise Anti-Stokes-Leuchtstoff oder Up-Converter) abgestimmt sein, oder umgekehrt.

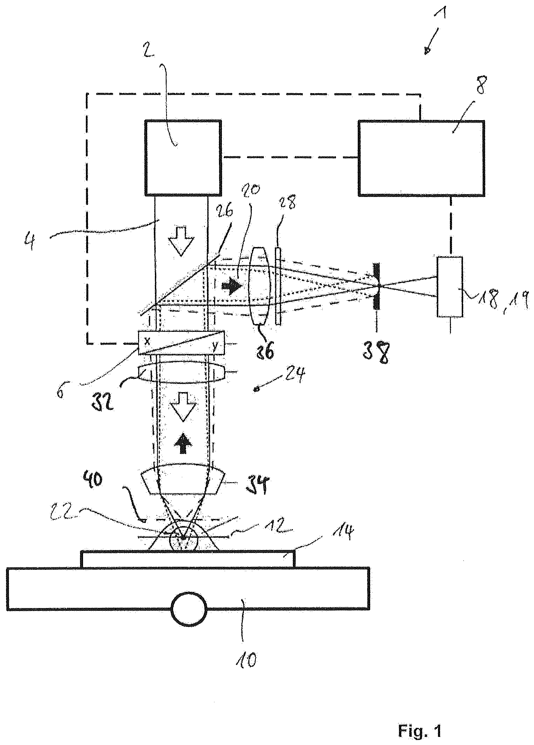

Wie sich weiter aus Figur 1 ergibt, ist in dem Strahlengang des Laserstrahls 4 eine Optik 24 eingesetzt. Die Optik 24 besteht in diesem Ausführungsbeispiel aus einer ersten Linse 32, die als Tubuslinse ausgebildet ist, und einer zweiten Linse 34, die als Objektiv oder Frontlinse ausgebildet ist. Mittels der beiden Linsen 32, 34 wird der Laserstrahl 4 auf die Sollmarkierungsebene 12 fokussiert, um dort eine Markierung 22 einzubringen.

Weiterhin ist in dem Strahlengang ein Strahlteiler 26 angeordnet, der dazu dient, die vom Referenzobjekt 16 emittierte Lumineszenzstrahlung 20 aus dem Strahlengang auszukoppeln, sodass dieser zum lichtempfindlichen Empfänger 18 geleitet wird. Der Strahlteiler 26 kann wie im Stand der Technik bekannt ausgebildet sein, beispielsweise als teildurchlässiger Spiegel. In bestimmten Ausführungsbeispielen kann vorgesehen sein, dass der Strahlteiler 26 mit einem Filter versehen ist.

Weiterhin ist dann im Strahlengang der Lumineszenzstrahlung 20 eine dritte Linse 36, die wiederum als Tubuslinse ausgebildet ist, sowie ein Filter 28 und eine Lochblende 38 angeordnet. Die dritte Linse 36 dient wieder zur Fokussierung, während das Filter 28 und die Lochblende 38 dazu dienen, Streulicht herauszufiltern. Genauer gesagt ist das Filter 28 in diesem Ausführungsbeispiel als Notchfilter ausgebildet, um nur Licht mit der Wellenlänge der Lumineszenzstrahlung (z.B. um die 500 nm) durchzulassen. So wird beispielsweise reflektierte Strahlung von dem Referenzobjekt 16 herausgefiltert. In dem Strahlengang, der vom Referenzobjekt 16 bis zum lichtempfindlichen Empfänger 18 verläuft, ist sowohl Lumineszenzstrahlung 20 als auch reflektierte nicht konvertierte Strahlung eingekoppelt. Es ist wichtig, die Strahlung, die nicht Lumineszenzstrahlung ist, herauszufiltern, sodass nicht irrtümlicherweise ein Lichtimpuls an dem lichtempfindlichen Empfänger 18 empfangen wird. Hierzu dient das Filter 28. Es können weitere Filter vorgesehen sein, wie beispielsweise Sperrfilter für die Wellenlänge des Laserstrahls 4 oder dergleichen.

Die Lochblende 38 dient dann dazu, nicht fokussierte Strahlung, das heißt ebenfalls Streustrahlung, die beispielsweise von einer Oberfläche 40 des Referenzobjekts 16 reflektiert wird, herauszufiltern.

Auf diese Weise ist der Strahlengang der Lumineszenzstrahlung 20 und des Laserstrahls 4 abschnittsweise identisch und verläuft jedenfalls vollständig durch die Optik 24, die für den Laserstrahl 4 vorgesehen ist. Auf diese Weise können Abbildungsfehler, die durch die Optik 24 hervorgerufen werden, unberücksichtigt bleiben, bzw. werden bei der Justierung automatisch mit berücksichtigt und müssen nicht separat berücksichtigt werden. Auch die Lumineszenzstrahlung 20, die für die Justierung verwendet wird, verläuft durch die Optik 24 und erfährt somit dieselben Ablenkungen, wie der durch die Optik 24 verlaufende Laserstrahl 4.

Die Figuren 2 und 3 zeigen zwei verschiedene Ausführungsbeispiele eines Referenzobjekts 16. Beide Referenzobjekte 16 sind jeweils als Karte, insbesondere Kreditkarte, Chipkarte, Passdokument oder dergleichen ausgebildet und weisen einen Grundkörper 30 auf. Bei dem in Figur 2 dargestellten Ausführungsbeispiel ist eine Referenzmarkierung 17 in Form eines Rechtecks mit Konversionsmaterial eingebracht.

Vorteilhaft an dieser Referenzmarkierung 17 ist, dass sie jeweils zwei Linien aufweist, die parallel zueinander sind und zwei, die im rechten Winkel zu diesen parallelen Linien stehen. Hierdurch sind vier Ecken gebildet, die rechte Winkel aufweisen, sodass auf besonders vorteilhafte Weise auch eine Winkelverzerrung erfasst werden kann. Beim Bestrahlen des Referenzobjekts 16 mit dem Laserstrahl 4 mit der Scanintensität wird vorzugsweise die Oberfläche des Kartenkörpers insgesamt abgescannt und jeweils einer Emissionsrichtung des Laserstrahls 4 der Empfang oder Nichtempfang von Lumineszenzstrahlung 20 am lichtempfindlichen Empfänger 18 zugeordnet.

Anstelle des Rechtecks sind auch andere Markierungen denkbar, wie insbesondere Raster, Barcode, QR-Code, ein oder mehrere Mehrecke, mehrere winkelig zueinander angeordnete Striche, mehrere Punkte. Auch Kombinationen hiervon sind denkbar und bevorzugt. Beispielsweise kann einerseits ein QR-Code vorgesehen sein, der bestimmte Informationen repräsentiert. Bevorzugt sind auch Kreuze, wie sie als Druckmarken bekannt sind und üblicherweise auf herkömmlichen Karten vorgesehen sind, um mittels einer optischen Kamera erfasst zu werden.

Die Breite einer Linie der Referenzmarkierung 17 entspricht in diesem Ausführungsbeispiel einem Bildpunkt. Die Breite liegt konkret in diesem Ausführungsbeispiel in etwa im Bereich von 50 µm. Vorzugsweise weist das Konversionsmaterial IR-anregbare und im sichtbaren Spektralbereich emittierende Anti-Stokes-Leuchtstoffe bzw. Up-Converter Materialien auf. Solche Anti-Stokes-Leuchtstoffe bzw. Up-Converter bestehen in aller Regel aus anorganischen Grundgittermaterialien, die insbesondere durch Einbau der Aktivatorkombinationen Yb³⁺-Er³⁺, Yb³⁺-Tm³⁺ und Yb³⁺-Ho³⁺ in die Lage versetzt werden über mehrstufige Anregungsprozesse IR-Strahlung in den sichtbaren Spektralbereich zu transformieren. Bei der Anwendung von Yb³⁺-Er³⁺- und Yb³⁺-Ho³⁺-Aktivator/Koaktivator-Kombinationen werden in Abhängigkeit von der Art des verwendetes Grundgitters zumeist grün oder rot emittierende Anti-Stokes-Leuchtstoffe erhalten, während Yb³⁺-Tm³⁺-dotierte Materialien zumeist blau lumineszieren. Als Grundgitter werden vorzugsweise oxidische anorganische Verbindungen (beispielsweise Y₂O₃, ZrO₂, La₂MoO₆, LaNbO₄ und LiYSiO₄), Oxyhalogenide (z.B. YOCI, LaOCI, LaOBr, YOF, LaOF), Oxysulfide (Y₂O₂S, La202S, Gd202S, Lu₂O₂S) oder Fluoride (YF3, LaF3, LiYF4, NaYF4, NaLaF4, BaYF₅) eingesetzt.

Besonders bevorzugt sind die Pigmente des Konversionsmaterials so gewählt, dass sie offsetdruckfähig sind. Vorzugsweise weisen die Pigmente einen Durchmesser d90 < 5,0 µm auf. Insgesamt ist eine Pigmentbeladung von etwa 5 bis 15 % bevorzugt, um eine ausreichende Upconversion-Lumineszenz zu erreichen. Neben dem Offsetdruckverfahren sind auch die für Sicherheitsdokumente in Form von Smart-Cards üblichen Druckverfahren Letterset oder Flexodruck sowohl mit oxidativ trocknenden Farben als auch UV-härtenden Farben anwendbar und einbezogen.

In dem Referenzobjekt 16 kann vorgesehen sein, dass zwei oder mehr Fokusebenen vorgesehen sind, in denen verschiedene Konversionsmaterialien angeordnet sind. So ist beispielsweise in einer ersten Ebene eine Yb³⁺-Er³⁺ Aktivator/Koaktivator-Kombination angeordnet, während in einer zweiten Ebene ein Yb³⁺-Tm³⁺- dotiertes Material verwendet wird. So kann je nach Empfang der Farbe der Lumineszenzstrahlung 20 bestimmt werden, in welcher Fokusebene der Laserstrahl 4 mit der Scanintensität eine Anregung hervorgerufen hat. Dies ist insbesondere dann bevorzugt, wenn eine farbige Lasermarkierung in dem Objekt 14 vorgenommen werden soll, das heißt, beispielsweise dann, wenn das zu markierende Objekt 14 in verschiedenen Ebenen verschiedene farbliche Pigmente aufweist, sodass, um ein einzelnes Pigment zu karbonisieren, die Fokusebene und damit die Sollmarkierungsebene 12 des Laserstrahls 4 mit Scanintensität verschoben werden muss. Auf diese Weise kann sichergestellt werden, dass der Fokus des Laserstrahls 4 in der korrekten Sollmarkierungsebene 12 liegt, und so das Pigment der korrekten Farbe karbonisiert wird.

Vorzugsweise ist ferner vorgesehen, dass die Referenzmarkierung 17 in etwa den Bereich markiert, der bei einem nachfolgend auf dem Tisch 10 aufgenommenen, zu markierenden Objekt 14, für die einzubringende Markierung vorgesehen ist. Hierdurch wird die Vorrichtung 1 zur Laserindividualisierung genau wenigstens in demjenigen Bereich justiert, der für die Markierung entscheidend ist. In dem Bereich, der außerhalb der Referenzmarkierung 17 in dem in Figur 2 dargestellten Ausführungsbeispiel liegt, findet keine Markierung oder sonstige Individualisierung statt, sodass eine Abbildung in diesem Bereich durch die Optik 24 nicht genau sein muss. Auch hierdurch wird die Justierung der Vorrichtung 1 weiter vereinfacht.

Figur 3 zeigt ein zweites Ausführungsbeispiel eines Referenzobjekts 16, das als Referenzmarkierung 17 ein Raster an einzelnen Pigmentpunkten aufweist. Auch dieses Raster eignet sich dazu, eine Justierung der Vorrichtung 1 vorzunehmen. Bei dem in Figur 3 gezeigten Ausführungsbeispiel wird ferner im Anschluss an die Justierung eine Markierung 22 (in dem Ausführungsbeispiel sternförmig dargestellt) eingebracht. Durch Einbringen dieser sternförmigen Markierung, die durch Bestrahlung des Referenzobjekts 16 mit einem Laserstrahl 4 mit Markierungsintensität erfolgt, wird gleichzeitig auch die Referenzmarkierung 17 zerstört, sodass die Verwendung des Referenzobjekts 16 für eine weitere Justierung der Vorrichtung 1 oder einer anderen Vorrichtung nicht möglich ist.

Anstelle des hier nur schematisch dargestellten Sterns als einzubringende Markierung 22 können ebenso andere Markierungen, insbesondere ein Justierprotokoll oder dergleichen eingebracht werden.

In der vorliegenden Anmeldung werden insgesamt eine Vorrichtung und ein System vorgeschlagen, bei dem keine hochauflösende Kamera erforderlich ist, um eine Justierung vorzunehmen. Dennoch kann es denkbar sein, dass eine Kamera vorhanden ist, insbesondere, um eine korrekte Positionierung eines zu markierenden Objekts zu prüfen. Diese Kamera muss dann aber keine hochauflösende Kamera sein, sondern kann eine herkömmliche Kamera sein.

Ferner soll verstanden werden, dass es auch Ausführungsformen geben kann, bei denen der Strahlengang der Lumineszenzstrahlung 20 nicht zwangsläufig mittels Optiken geführt ist. Je nach Helligkeit der emittierten Lumineszenzstrahlung 20, ist es ausreichend, dass der lichtempfindliche Empfänger 18 diese gestreute Strahlung empfängt. Hierfür ist dann unter Umständen ein sehr empfindlicher lichtempfindlicher Empfänger 18 vorzusehen, der gegebenenfalls mit einem oder mehreren Filtern versehen ist. Auf diese Weise kann die Vorrichtung noch einfacher konstruiert werden, und insbesondere kostengünstiger hergestellt werden, da Elemente, wie insbesondere der Strahlenteiler 26 und die Linse 36 entfallen können.

## Patentansprüche

1. System zur Individualisierung eines zu markierenden Objekts (14) mittels Laser, umfassend
ein Referenzobjekt (16), insbesondere Referenzkarte mit einem Grundkörper (30) und einer Referenzmarkierung (17) mit Konversionsmaterial, wobei die Referenzmarkierung (17) ein Koordinatensystem des Referenzobjektes repräsentiert und ausgewählt ist aus einer Gruppe umfassend: Raster, Barcode, QR-Code, ein oder mehrere Mehrecke, mehrere winkelig zueinander angeordnete Striche, mehrere Punkte, wobei eine Breite der Referenzmarkierung (17) einem Bildpunkt entspricht; und
eine Vorrichtung (1) zur Individualisierung eines zu markierenden Objekts (14) mittels Laser, mit
einer Laserquelle (2) zum Erzeugen eines Laserstrahls (4),
einer Zweikoordinatenablenkeinheit (6) zum gezielten Ablenken des Laserstrahls (4) um unterschiedliche Raumwinkel,
einer Steuereinrichtung (8) zum Steuern der Laserquelle (2) und der Zweikoordinatenablenkeinheit (6),
und
einem Tisch (10) mit einer Sollmarkierungsebene (12) zur Aufnahme eines mittels des Laserstahls (4) zu markierenden Objektes (14),
wobei die Steuereinrichtung (8) dazu eingerichtet ist, die Laserquelle (2) so zu steuern, dass wenigstens ein Laserstrahl (4) mit einer ersten Scanintensität und einer zweiten Markierungsintensität erzeugbar ist, wobei die Scanintensität geringer ist als die Markierungsintensität und bei Bestrahlen des Referenzobjektes (16) mit der Scanintensität keine Markierung des Referenzobjektes (16) erfolgt,
wobei die Vorrichtung (1) einen lichtempfindlichen Empfänger (18) aufweist, der zum Erfassen von vom Referenzobjekt (16) emittierter Lumineszenzstrahlung (20) ausgebildet ist, und
wobei der lichtempfindliche Empfänger (18) mit der Steuereinrichtung (8) verbunden ist, um einer ausgesteuerten Richtung des Laserstahls (4) einen Empfang der Lumineszenzstrahlung (20) zuzuordnen.

2. System nach Anspruch 1, wobei die Steuereinrichtung (8) ferner dazu eingerichtet ist eine vorbestimmte Markierung (22) in das auf dem Tisch (10) aufgenommene Objekt (14) einzubringen, wobei eine Positionierung der Markierung (22) in der Sollmarkierungsebene (12) in Abhängigkeit der empfangenen Lumineszenzstrahlung (20) erfolgt.

3. System nach Anspruch 1 oder 2, wobei die Steuereinrichtung (8) dazu eingerichtet ist basierend auf einer ersten von dem Empfänger (18) bei einer ersten Richtung des Laserstrahls (4) empfangenen Lumineszenzstrahlung (20), und einer zweiten von dem Empfänger (18) bei einer von der ersten Richtung verschiedenen zweiten Richtung des Laserstrahls (4) empfangenen Lumineszenzstrahlung (20) eine eindeutige Position des Referenzobjektes (16) zu ermitteln.

4. System nach einem der vorstehenden Ansprüche, wobei der Strahlengang des emittierten Laserstrahls (4) und der Lumineszenzstrahlung (20) wenigstens abschnittsweise identisch sind, und/oder aufweisend eine Optik (24), die zwischen der Zweikoordinatenablenkeinheit (6) und der Sollmarkierungsebene (12) angeordnet ist, wobei ein Strahlengang der Lumineszenzstrahlung (20) durch die Optik (24) verläuft.

5. System nach einem der vorstehenden Ansprüche, aufweisend einen Strahlteiler (26) zum Leiten der Lumineszenzstrahlung (20) zum lichtempfindlichen Empfänger (18).

6. System nach Anspruch 4 und 5, wobei die Zweikoordinatenablenkeinheit (6) zwischen der Optik (24) und dem Strahlteiler (26) angeordnet ist.

7. System nach einem der vorstehenden Ansprüche, aufweisend ein Filter (28) für den lichtempfindlichen Empfänger (18), zum Herausfiltern von Wellenlängen, die nicht der Lumineszenzstrahlung (20) zuzuordnen sind.

8. System nach einem der vorstehenden Ansprüche, wobei der lichtempfindliche Empfänger (18) als Fotodiode (19) ausgebildet ist.

9. System nach einem der vorstehenden Ansprüche, wobei die Steuereinrichtung (8) dazu eingerichtet ist, basierend auf einer Sequenz von dem Empfänger (18) empfangener Lumineszenzstrahlung (20), eine Information zu decodieren.

10. Verfahren zum Justieren einer Vorrichtung (1) zur Individualisierung eines zu markierenden Objekts (14) mittels Laser, insbesondere wie in einem System nach einem der vorstehenden Ansprüche beschrieben, mit den Schritten:
- Anordnen eines Referenzobjekts (16) mit einer Referenzmarkierung (17) mit Konversionsmaterial auf einem Tisch (10) der Vorrichtung (1) zur Individualisierung;
- Erzeugen eines Laserstrahls (4) mit einer Scanintensität, bei der keine Markierung eines Referenzobjekts (16) erfolgt;
- Scannen des Referenzobjekts (16) mittels des Laserstrahls (4) mit der Scanintensität durch Steuern der Richtung des Laserstrahls (4);
- Empfangen einer vom Referenzobjekt (16) emittierten Lumineszenzstrahlung (20); und
- Zuordnen der Richtung des Laserstrahls (4) zum Empfang der Lumineszenzstrahlung (20);
- Erzeugen eines Laserstrahls (4) mit einer Markierungsintensität; und
- in Abhängigkeit der empfangenen Lumineszenzstrahlung (20), Einbringen einer vorbestimmten Markierung (22) in ein Objekt (14) mittels des Laserstrahls (4) mit der Markierungsintensität.

11. Verfahren nach Anspruch 10, umfassend:
- Ermitteln basierend auf der Zuordnung der Richtung des Laserstrahls (4) zum Empfang der Lumineszenzstrahlung (20) eine Lage eines Koordinatensystems des Referenzobjekts (16); und
- Ermitteln einer Abweichung des Koordinatensystems des Referenzobjekts (16) zu einem Koordinatensystem der Vorrichtung (1) zur Individualisierung,
- Transformieren des Koordinatensystems der Vorrichtung (1) zur Individualisierung in Abhängigkeit der ermittelten Abweichung, und
- Einbringen einer Markierung (22) in das Referenzobjekt (16) mittels des Laserstrahls (4) mit der Markierungsintensität, wenigstens teilweise über die Referenzmarkierung (17).

## Claims

1. A system for individualizing an object (14) to be marked by means of a laser, comprising
a reference object (16), particularly a reference card having a base body (30) and a reference marking (17) having conversion material, the reference marking (17) representing a coordinate system of the reference object and being selected from a group comprising: pattern, barcode, QR code, one or more polygons, a plurality of lines disposed at angles to each other, a plurality of dots, a width of the reference marking (17) corresponding to one image point; and
a device (1) for individualizing an object (14) to be marked by means of a laser, having
a laser source (2) for generating a laser beam (4),
a two-coordinate deflection device (6) for specifically deflecting the laser beam (4) by varying spatial angles,
a control device (8) for controlling the laser source (2) and the two-coordinate deflection device (6),
and
a table (10) having a specified marking plane (12) for receiving an object (14) to be marked by means of the laser beam (4),
wherein the control device (8) is set up for controlling the laser source (2) such that at least one laser beam (4) can be generated at a first scanning intensity and a second marking intensity, wherein the scanning intensity is less than the marking intensity and no marking of the reference object (16) takes place when irradiating the reference object (16) at the scanning intensity,
wherein the device (1) comprises a light-sensitive detector (18) implemented for capturing luminescent radiation (20) emitted by the reference object (16), and
wherein the light-sensitive detector (18) is connected to the control device (8) in order to associate a controlled direction of the laser beam (4) with a detection of said luminescent radiation (20).

2. The system according to claim 1, wherein the control device (8) is further set up for introducing a predetermined marking (22) into the object (14) received on the table (10), wherein positioning of the marking (22) takes place in the specified marking plane (12) as a function of the detected luminescent radiation (20).

3. The system according to claim 1 or 2, wherein the control device (8) is set up for determining an unambiguous position of the reference object (16) based on a first luminescent radiation (20) detected by the detector (18) for a first direction of the laser beam (4) and a second luminescent radiation (20) detected by the detector (18) for a second direction of the laser beam (4) different from the first direction.

4. The system according to any one of the preceding claims, wherein the beam path of the emitted laser beam (4) and of the luminescent radiation (20) are identical at least in segments, and/or comprise a lens (24) disposed between the two-coordinate deflection device (6) and the specified marking plane (12), wherein a beam path of the luminescent radiation (20) runs through the lens (24).

5. The system according to any one of the preceding claims, comprising a beam splitter (26) for guiding the luminescent radiation (20) to the light-sensitive detector (18).

6. The system according to claims 4 and 5, wherein the two-coordinate deflection device (6) is disposed between the lens (24) and the beam splitter (26).

7. The system according to any one of the preceding claims, comprising a filter (28) for the light-sensitive detector (18) for filtering out wavelengths not associated with the luminescent radiation (20).

8. The system according to any one of the preceding claims, wherein the light-sensitive detector (18) is implemented as a photodiode (19).

9. The system according to any one of the preceding claims, wherein the control device (8) is set up for decoding information based on a sequence of luminescent radiation (20) detected by the detector (18).

10. A method for adjusting a device (1) for individualizing an object (14) to be marked by means of a laser, particularly as in a system according to any one of the preceding claims, having the steps:
- disposing a reference object (16) comprising a reference marking (17) having conversion material on a table (10) of the device (1) for individualizing;
- generating a laser beam (4) at a scanning intensity, at which no marking of a reference object (16) occurs;
- scanning the reference object (16) with the laser beam (4) at the scanning intensity by controlling the direction of the laser beam (4);
- detecting luminescent radiation (20) emitted by the reference object (16); and
- associating the direction of the laser beam (4) with the detection of said luminescent radiation (20);
- generating a laser beam (4) at a marking intensity; and
- introducing a predetermined marking (22) into an object (14) by means of the laser beam (4) at the marking intensity as a function of the detected luminescent radiation (20).

11. The method according to claim 10, comprising:
- determining a location of a coordinate system of the reference object (16) based on the associating of the direction of the laser beam (4) with the detection of the luminescent radiation (20); and
- determining a deviation of the coordinate system of the reference object (16) from a coordinate system of the device (1) for individualizing,
- transforming the coordinate system of the device (1) for individualizing as a function of the determined deviation, and
- introducing a marking (22) into the reference object (16) by means of the laser beam (4) at the marking intensity, at least partially over the reference marking (17).

## Revendications

1. Système pour individualiser au moyen d'un laser un objet (14) à marquer, comprenant
un objet de référence (16), en particulier une carte de référence avec un corps de base (30) et un marquage de référence (17) avec un matériau de conversion, dans lequel le marquage de référence (17) représente un système de coordonnées de l'objet de référence et est sélectionné dans un groupe comprenant : une trame, un code à barres, un code QR, un ou plusieurs polygones, plusieurs traits disposés en angle les uns par rapport aux autres, plusieurs points, dans lequel une largeur du marquage de référence (17) correspond à un pixel ; et
un dispositif (1) pour individualiser au moyen d'un laser un objet (14) à marquer, avec
une source laser (2) pour générer un faisceau laser (4),
une unité de déviation à deux coordonnées (6) pour dévier de manière ciblée le faisceau laser (4) selon des angles solides différents,
un dispositif de commande (8) pour commander la source laser (2) et l'unité de déviation à deux coordonnées (6),
et
une table (10) avec un plan de marquage cible (12) destinée à recevoir un objet (14) à marquer au moyen du faisceau laser (4),
dans lequel le dispositif de commande (8) est conçu pour commander la source laser (2) de manière à pouvoir générer au moins un faisceau laser (4) avec une première intensité de balayage et une deuxième intensité de marquage, l'intensité de balayage étant inférieure à l'intensité de marquage et aucun marquage de l'objet de référence (16) n'ayant lieu lors de l'irradiation de l'objet de référence (16) avec l'intensité de balayage,
dans lequel le dispositif (1) comprend un récepteur photosensible (18) qui se présente sous une forme pour capter un rayonnement luminescent (20) émis par l'objet de référence (16), et
dans lequel le récepteur photosensible (18) est relié au dispositif de commande (8) afin d'associer une réception du rayonnement luminescent (20) à une direction modulée du faisceau laser (4).

2. Système selon la revendication 1, dans lequel le dispositif de commande (8) se présente en outre sous une forme pour introduire un marquage prédéterminé (22) dans l'objet (14) accueilli sur la table (10), dans lequel un positionnement du marquage (22) dans le plan de marquage cible (12) est effectué en fonction du rayonnement luminescent (20) reçu.

3. Système selon la revendication 1 ou 2, dans lequel le dispositif de commande (8) est configuré pour déterminer une position univoque de l'objet de référence (16) sur la base d'un premier rayonnement luminescent (20) reçu par le récepteur (18) pour une première direction du faisceau laser (4) et d'un deuxième rayonnement luminescent (20) reçu par le récepteur (18) pour une deuxième direction du faisceau laser (4), différente de la première direction.

4. Système selon l'une quelconque des revendications précédentes, dans lequel le trajet de rayons du faisceau laser (4) émis et du rayonnement luminescent (20) sont identiques au moins en certaines portions et/ou présentant une optique (24) qui est disposée entre l'unité de déviation à deux coordonnées (6) et le plan de marquage cible (12), dans lequel un trajet de rayons du rayonnement luminescent (20) traverse l'optique (24).

5. Système selon l'une quelconque des revendications précédentes, présentant un séparateur de faisceau (26) pour diriger le rayonnement luminescent (20) vers le récepteur photosensible (18).

6. Système selon les revendications 4 et 5, dans lequel l'unité de déviation à deux coordonnées (6) est disposée entre l'optique (24) et le séparateur de faisceau (26).

7. Système selon l'une quelconque des revendications précédentes, présentant un filtre (28) pour le récepteur photosensible (18), destiné à éliminer par filtrage des longueurs d'onde qui ne sont pas attribuables au rayonnement luminescent (20).

8. Système selon l'une quelconque des revendications précédentes, dans lequel le récepteur photosensible (18) se présente sous la forme d'une photodiode (19).

9. Système selon l'une quelconque des revendications précédentes, dans lequel le dispositif de commande (8) est conçu pour décoder une information sur la base d'une séquence de rayonnement luminescent (20) reçue par le récepteur (18).

10. Procédé pour régler un dispositif (1) pour l'individualisation, au moyen d'un laser, d'un objet (14) à marquer, en particulier tel que décrit dans un système selon l'une quelconque des revendications précédentes, comprenant les étapes :
- disposer un objet de référence (16) avec un marquage de référence (17) avec un matériau de conversion sur une table (10) du dispositif (1) pour l'individualisation ;
- générer un faisceau laser (4) avec une intensité de balayage à laquelle aucun marquage d'un objet de référence (16) n'a lieu ;
- balayer l'objet de référence (16) au moyen du faisceau laser (4) avec l'intensité de balayage par commande de la direction du faisceau laser (4) ;
- recevoir un rayonnement luminescent (20) émis par l'objet de référence (16) ; et
- associer la direction du faisceau laser (4) à la réception du rayonnement luminescent (20) ;
- générer un faisceau laser (4) avec une intensité de marquage ; et
- en fonction du rayonnement luminescent (20) reçu, introduire un marquage prédéterminé (22) dans un objet (14) au moyen du faisceau laser (4) ayant l'intensité de marquage.

11. Procédé selon la revendication 10, comprenant :
- déterminer, sur la base de l'association de la direction du faisceau laser (4) à la réception du rayonnement luminescent (20), une position d'un système de coordonnées de l'objet de référence (16) ; et
- déterminer un écart du système de coordonnées de l'objet de référence (16) par rapport à un système de coordonnées du dispositif (1) pour l'individualisation ;
- transformer le système de coordonnées du dispositif (1) pour l'individualisation en fonction de l'écart déterminé, et
- introduire un marquage (22) dans l'objet de référence (16) au moyen du faisceau laser (4) ayant l'intensité de marquage, au moins partiellement via le marquage de référence (17).
